# EUROPEAN PATENT APPLICATION

(11) **EP 4 826 646 A1**
(43) Date of publication of application: **21.10.2026**
(21) Application number: 24918624.8
(22) Date of filing: 07.10.2024
(51) Int. Cl.: G06T 7/00

(54) **DETECTION DEVICE, DETECTION SYSTEM, DETECTION METHOD, AND MODEL GENERATION DEVICE**

(30) Priority: 18.01.2024 JP 2024006099
(71) Applicant: JFE Steel Corporation, Tokyo 100-0011 (JP)
(72) Inventor: KIMURA, Yuki, Tokyo 100-0011 (JP)
(74) Representative: Hoffmann Eitle
(86) International application number: PCT/JP2024/035792
(87) International publication number: WO 2025/154337

(57) **Abstract**

A detection device according to the present invention is a detection device for determining whether or not a determination target image is a detection target image including a detection target object. The detection device includes an image restoration and generation unit configured to generate a non-detection target image corresponding to the determination target image by inputting data of the determination target image to a learning model in which data of a processed image is input data and data of a non-detection target image not including the detection target object according to the processed image is output data, a difference calculation unit configured to generate a difference image between the determination target image and the non-detection target image generated by the image restoration and generation unit, and a detection unit configured to determine whether or not the determination target image is the detection target image based on the difference image generated by the difference calculation unit.

## Description

### Field

The present invention relates to a detection device, a detection system, a detection method, and a model generation device that determine whether or not a determination target image is a detection target image including a detection target object.

### Background

Patent Literature 1 discloses a device that extracts a change area from an image obtained by sequentially capturing a monitoring target area with an imaging device, compares a feature amount of the monitoring target area based on the change area extracted with a set value of a predetermined feature amount, and determines whether or not an event has occurred.

### Citation List

### Patent Literature

Patent Literature 1: JP 5388827 B2

### Summary

### Technical Problem

In the device described in Patent Literature 1, when an obstacle such as a safety fence, a fence, or a dustproof/drip-proof cover exists between the monitoring target area and the imaging device, there is a possibility that a detection target object present in the monitoring target area cannot be detected. Therefore, it has been expected to provide a technique capable of accurately detecting a detection target object present in a monitoring target area even when an obstacle or an object having low transmittance exists between the monitoring target area and the imaging device.

The present invention has been made in view of the above problem, and an object of the present invention is to provide a detection device, a detection system, and a detection method that are capable of accurately detecting a detection target object present in a monitoring target area even when an obstacle or an object having low transmittance exists between the monitoring target area and the imaging device. Another object of the present invention is to provide a model generation device capable of generating a learning model that accurately detects the detection target object present in the monitoring target area even when an obstacle or an object having low transmittance exists between the monitoring target area and the imaging device. Solution to Problem

A detection device according to the present invention determines whether or not a determination target image is a detection target image including a detection target object, and includes: an image restoration and generation unit configured to generate a non-detection target image corresponding to the determination target image by inputting data of the determination target image to a learning model in which data of a processed image is input data and data of the non-detection target image not including the detection target object according to the processed image is output data; a difference calculation unit configured to generate a difference image between the determination target image and the non-detection target image generated by the image restoration and generation unit; and a detection unit configured to determine whether or not the determination target image is the detection target image based on the difference image generated by the difference calculation unit.

The detection device may include an image processing unit configured to perform image processing on the difference image generated by the difference calculation unit to emphasize a feature of the detection target object, and the detection unit may be configured to determine whether or not the determination target image is the detection target image based on the difference image on which the image processing is performed by the image processing unit.

The image processing unit may be configured to perform masking on an image area other than a predetermined image area in which the detection target object may exist.

The detection device may include a model generation unit configured to generate the learning model, using the data of the non-detection target image as learning source data, by performing learning to reconstruct a non-detection target image same as the learning source data or a non-detection target image approximating the learning source data.

The model generation unit may be an autoencoder.

The model generation unit may be configured to add the data of the determination target image that is determined to be the non-detection target image by the detection unit to the learning source data, and regenerate the learning model.

A detection system according to the present invention includes: the detection device according to the present invention; and an imaging unit configured to capture an image of a monitoring target area and outputs data of the image captured of the monitoring target area to the detection device as data of the determination target image.

A detection method according to the present invention determines whether or not a determination target image is a detection target image including a detection target object, and includes: an image restoration and generation step of generating a non-detection target image corresponding to the determination target image by inputting data of the determination target image to a learning model that uses data of a processed image as input data and data of the non-detection target image not including the detection target object according to the processed image as output data; a difference calculation step of generating a difference image between the determination target image and the non-detection target image generated in the image restoration and generation step; and a detection step of determining whether or not the determination target image is the detection target image based on the difference image generated in the difference calculation step.

A model generation device according to the present invention generates a learning model for determining whether or not a determination target image is a detection target image including a detection target object, and includes: a model generation unit configured to generate a learning model in which data of a processed image is input data and data of a non-detection target image not including the detection target object according to the processed image is output data, wherein the model generation unit is configured to generate the learning model, using the data of the non-detection target image as learning source data, by performing learning to reconstruct a non-detection target image same as the learning source data or a non-detection target image approximating the learning source data.

### Advantageous Effects of Invention

According to a detection device, a detection system, and a detection method of the present invention, even when an obstacle or an object having low transmittance exists between a monitoring target area and an imaging device, it is possible to accurately detect a detection target object present in the monitoring target area. Further, according to a model generation device of the present invention, even when an obstacle or an object having low transmittance exists between the monitoring target area and the imaging device, it is possible to generate a learning model that accurately detects the detection target object present in the monitoring target area.

### Brief Description of Drawings

[FIG. 1] FIG. 1 is a block diagram illustrating a configuration of a detection system according to an embodiment of the present invention.
[FIG. 2] FIG. 2 is a flowchart illustrating a flow of a detection process according to the embodiment of the present invention.
[FIG. 3] FIG. 3 is a diagram illustrating a generation process of a difference image.
[FIG. 4] FIG. 4 is a flowchart illustrating a flow of a learning model generation process according to the embodiment of the present invention.
[FIG. 5] FIG. 5 is a diagram illustrating a configuration example of an autoencoder.
[FIG. 6] FIG. 6 is a diagram illustrating a detection process according to an example.

### Description of Embodiments

Hereinafter, a configuration and an operation of a detection system according to an embodiment of the present invention will be described with reference to the drawings.

### [Configuration]

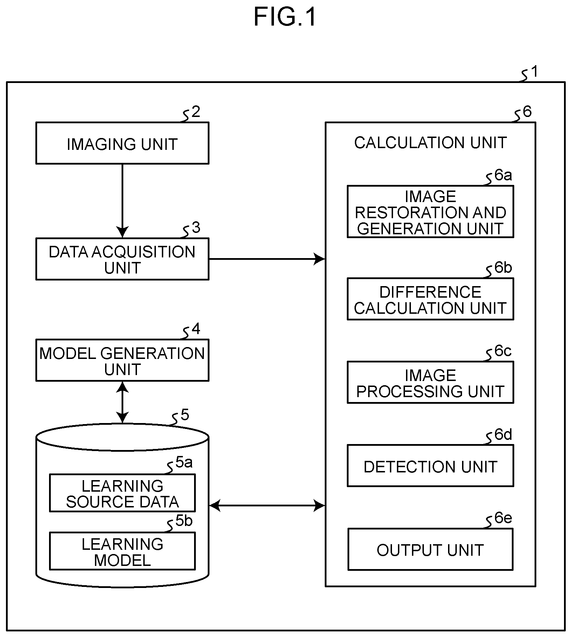

FIG. 1 is a block diagram illustrating a configuration of the detection system according to the embodiment of the present invention. As illustrated in FIG. 1, a detection system 1 according to the embodiment of the present invention is a system that determines whether or not a determination target image is a detection target image including a detection target object, and includes an imaging unit 2, a data acquisition unit 3, a model generation unit 4, a learning database 5, and a calculation unit 6. The data acquisition unit 3, the model generation unit 4, and the calculation unit 6 function as a detection device according to the present invention.

The imaging unit 2 includes an imaging device such as a camera or an industrial television (ITV) camera. The imaging unit 2 captures an image of a monitoring target area, and outputs captured image data of the monitoring target area to the data acquisition unit 3. Specifically, the imaging unit 2 captures images of the monitoring target area before and after an event is switched or before and after a movable object moves, and outputs captured image data of the monitoring target area to the data acquisition unit 3.

The data acquisition unit 3 and the model generation unit 4 are functional blocks realized by executing a computer program using an arithmetic processing device such as a CPU inside an information processing apparatus. Functions of the data acquisition unit 3 and the model generation unit 4 will be described later.

The learning database 5 is configured with a nonvolatile storage device. The learning database 5 stores learning source data 5a and a learning model 5b. Although details will be described later, the learning source data 5a is image data of the monitoring target area at a point in time when the detection target object is not present in the monitoring target area. The learning model 5b is a machine learning model in which input data is image data of the monitoring target area of the determination target (determination target image data) and output data is image data of the monitoring target area at a point in time when the detection target object is not present in the monitoring target area corresponding to the input data. The model generation unit 4 and the learning database 5 may be configured as a system or a device different from the detection system 1.

The calculation unit 6 is configured by an arithmetic processing device such as a CPU inside an information processing apparatus. The calculation unit 6 functions as an image restoration and generation unit 6a, a difference calculation unit 6b, an image processing unit 6c, a detection unit 6d, and an output unit 6e when the arithmetic processing device executes a computer program. Functions of these units will be described later. The information processing apparatus that realizes these units and the information processing apparatus that realizes the data acquisition unit 3 and the model generation unit 4 may be the same apparatus or may be different apparatuses. In the case of different apparatuses, the information processing apparatuses are connected to each other via a telecommunication line.

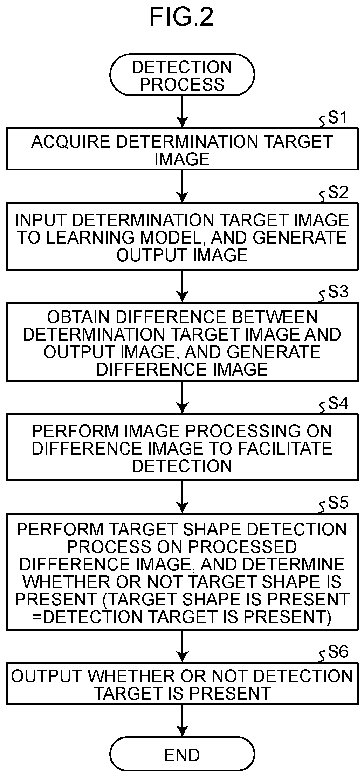

The detection system 1 having the above configuration executes a detection process and a learning model generation process described below, thereby making it possible to accurately detect the detection target object present in the monitoring target area even when an obstacle or an object having low transmittance exists between the monitoring target area and the imaging unit 2. Hereinafter, the operation of the detection system 1 when the detection process and the learning model generation process are executed will be described with reference to a flowchart illustrated in FIG. 2.

### [Detection Process]

First, the operation of the detection system 1 when the detection process is executed will be described with reference to FIG. 2.

FIG. 2 is a flowchart illustrating a flow of the detection process according to the embodiment of the present invention. The flowchart illustrated in FIG. 2 starts at a timing when a command to execute the detection process is input to the calculation unit 6, and the detection process proceeds to a process in Step S1.

In the process in Step S1, the data acquisition unit 3 inputs the image data of the monitoring target area output from the imaging unit 2 to the calculation unit 6 as the determination target image data. This completes the process in Step S1, and the detection process proceeds to a process in Step S2.

In the process in Step S2, the image restoration and generation unit 6a inputs the determination target image data input by the data acquisition unit 3 to the learning model 5b as input data, thereby generating image data (output image) of the monitoring target area at a point in time when the detection target object reflecting a feature of the determination target image is not present. This completes the process in Step S2, and the detection process proceeds to a process in Step S3.

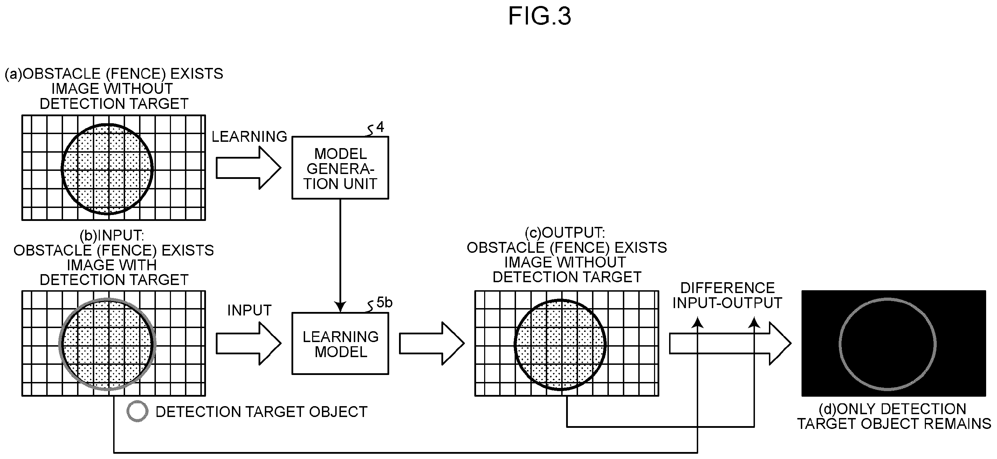

In the process in Step S3, the difference calculation unit 6b generates a difference image between the determination target image input by the data acquisition unit 3 and the image of the monitoring target area generated by the image restoration and generation unit 6a. An image of a difference image generation process is illustrated in FIG. 3. Details of FIG. 3 will be described later. This completes the process in Step S3, and the detection process proceeds to a process in Step S4.

In the process in Step S4, the image processing unit 6c performs image processing on the difference image generated, such as a binarization process, a mask process, an edge detection process, a smoothing process, a filtering process, a correction process, an expansion process, and a contraction process, in order to emphasize a feature such as a shape of the detection target object and facilitate detection of the detection target object. This completes the process in Step S4, and the detection process proceeds to a process in Step S5.

In the process in Step S5, the detection unit 6d determines whether or not the feature such as the shape of the detection target object (target shape) exists in the difference image after the image processing, thereby determining whether or not the detection target object is present in the difference image. When the target shape is a circular shape, the detection unit 6d may detect the target shape using a technique such as the Hough transform or minimum circumscribed circle method. When the detection target object appears in the determination target image, as illustrated in FIG. 3, the difference image retains the feature of the detection target object such as the target shape only in a place where the detection target object exists. On the other hand, when the detection target image does not appear in the determination target image, nothing appears in the difference image. This completes the process in Step S5, and the detection process proceeds to a process in Step S6.

In the process in Step S6, the output unit 6e outputs, to an output device, whether or not the detection target object is present in the determination target image according to a determination result of the detection unit 6d. Examples of the output device include a printing device, a display device, and a voice output device. This completes the process in Step S6, and a series of detection processes ends.

### [Learning Model Generation Process]

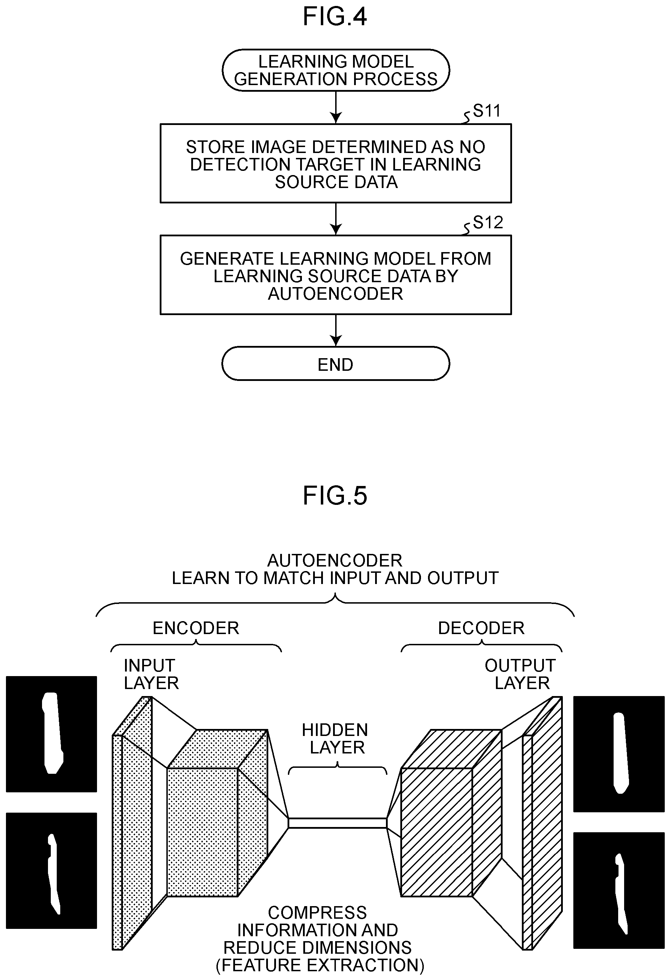

Next, the operation of the detection system 1 when the learning model generation process is executed will be described with reference to FIG. 4.

FIG. 4 is a flowchart illustrating a flow of the learning model generation process according to the embodiment of the present invention. The flowchart illustrated in FIG. 4 starts at a timing when image data of the monitoring target area in which it is determined that the detection target object is not present is acquired, and the learning model generation process proceeds to a process in Step S11. The image data of the monitoring target area in which it is determined that the detection target object is not present may be obtained in the detection process described above, or may be separately collected and determined.

In the process in Step S11, the model generation unit 4 adds the image data of the monitoring target area in which it is determined that the detection target object is not present to the learning source data 5a stored in the learning database 5. This completes the process in Step S11, and the learning model generation process proceeds to a process in Step S12.

In the process in Step S12, the model generation unit 4 generates the learning model 5b using the learning source data 5a. As the learning model 5b, a learning model capable of reconstructing an image same as or approximate to the learning source data 5a is used. An example of the learning model is an autoencoder. A configuration example of the autoencoder is illustrated in FIG. 5. As illustrated in FIG. 5, the autoencoder is a learning model that learns a feature from a learning image. The autoencoder extracts the feature by compressing an input image to reduce dimensionality, reconstructs an image that matches or approximates the learning content, and outputs the image.

Therefore, when data of the determination target image is input, the learning model 5b trained using the learning source data 5a outputs, as output data, image data of the monitoring target area at a point in time when the detection target object is not present in the monitoring target area corresponding to the determination target image. As described above, since the autoencoder has a property of learning parameters so as to restore a trained image, there are advantages of requiring less adjustment to respond to an unknown object or disturbance and requiring less amount of learning data. Therefore, even when the determination target image has changed according to a change in the surrounding environment of the imaging unit 2, the learning model 5b generates an output image according to the determination target image, and thus it is not necessary to perform adjustment according to various conditions. This completes the process in Step S12, and a series of the learning model generation processes ends.

As is clear from the above description, the detection system 1 according to the embodiment of the present invention includes the image restoration and generation unit 6a that generates a non-detection target image corresponding to the determination target image by inputting the determination target image data to the learning model that uses data of a processed image as input data and data of the non-detection target image that does not include the detection target object corresponding to the processed image as output data, the difference calculation unit 6b that generates the difference image between the determination target image and the non-detection target image generated by the image restoration and generation unit 6a, and the detection unit 6d that determines whether or not the determination target image is the detection target image based on the difference image generated by the difference calculation unit 6b. As a result, even when an obstacle or an object having low transmittance exists between the monitoring target area and the imaging unit 2, it is possible to accurately detect the detection target object present in the monitoring target area. Still more, according to the model generation unit 4 and the learning database 5, even when an obstacle or an object having low transmittance exists between the monitoring target area and the imaging unit 2, it is possible to generate a learning model that accurately detects the detection target object present in the monitoring target area.

### [Example]

In an example, the detection target object is a metal tube that supports a metal product in a metal product manufacturing process to prevent an inner diameter of the metal product from being crushed when the metal product is wound up. The present invention was applied to a process of determining whether or not the metal tube is placed in a predetermined position. As an obstacle between the detection target object and the imaging unit 2, a wire mesh fence, a dustproof or drip-proof cover, and the like were assumed. In the learning model generation process, an image of the monitoring target area in a state that the metal tube is not placed in a predetermined position is captured, and learning is performed by the autoencoder using 25 collected images captured, thereby generating the learning model 5b. A layer structure of the autoencoder was as follows, and a pixel value change, a contrast change, and a structural change were evaluated and used as indices of the structural similarity. As a result, a learning model that generates an image in the state that the metal tube is not placed in the predetermined position was obtained.
·Encoder: Compressing images of 300 × 300 pixels to 100 dimensions
·Decoder: Restoring images of 100 dimensions to 300 × 300 pixels
·Number of times of learning: 500 epochs
·Loss function: Structural similarity (SSIM)

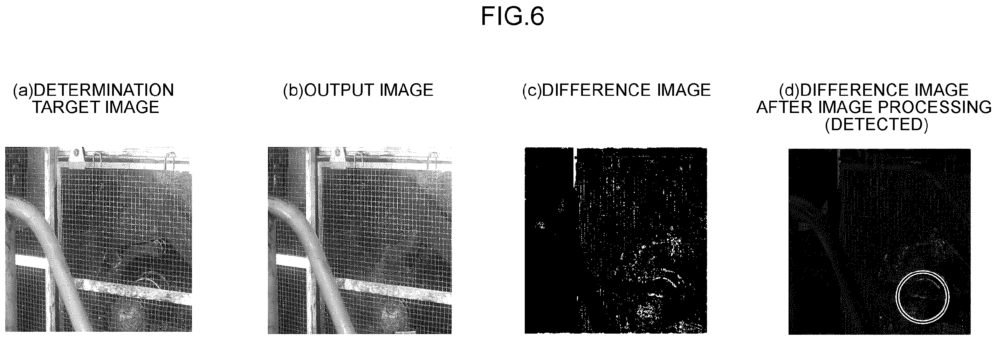

When an image (regardless of the presence or absence of the detection target object) is input to the learning model, an image in the state that the metal tube is not placed in a predetermined position is output. Thereafter, a difference between the input image and the output image is calculated. A difference image between the input image in which the metal tube is placed in the predetermined position and the output image in which the metal tube is not placed in the predetermined position is an image of the metal tube placed in the predetermined position. Next, image processing such as the binarization process, the edge detection process, and the smoothing process was performed to emphasize the feature of the metal tube, and then portions of image other than the predetermined position were masked in order to further improve the detection accuracy. Then, circles and arcs were detected using the Hough transform. A radius and center position of the circle, which are parameters of the Hough transform, were previously examined from the captured image and used. As a result, the circle may be detected in a place other than the predetermined position. However, when the camera is fixed, the radius and the center position of the circle when the metal tube is in the predetermined position are known, and the circle can be detected in a reasonable position. As a result, as illustrated in FIG. 6, even when an obstacle or an object having low transmittance exists between the monitoring target area and the imaging unit, it was possible to accurately determine whether or not the detection target object appears in the determination target image.

Although the embodiments to which the invention made by the present inventors is applied have been described above, the present invention is not limited by the description and drawings constituting a part of the disclosure of the present invention according to the present embodiments. In other words, other embodiments, examples, operation techniques, and the like made by those skilled in the art based on the present embodiment are all included in the scope of the present invention.

### Industrial Applicability

According to the present invention, it is possible to provide the detection device, the detection system, and the detection method capable of accurately detecting the detection target object present in the monitoring target area even when an obstacle or an object having low transmittance exists between the monitoring target area and the imaging device. Furthermore, according to the present invention, it is possible to provide the model generation device capable of generating the learning model that accurately detects the detection target object present in the monitoring target area even when an obstacle or an object having low transmittance exists between the monitoring target area and the imaging device.

### Reference Signs List

1 DETECTION SYSTEM
2 IMAGING UNIT
3 DATA ACQUISITION UNIT
4 MODEL GENERATION UNIT
5 LEARNING DATABASE
5a LEARNING SOURCE DATA
5b LEARNING MODEL
6 CALCULATION UNIT
6a IMAGE RESTORATION AND GENERATION UNIT
6b DIFFERENCE CALCULATION UNIT
6c IMAGE PROCESSING UNIT
6d DETECTION UNIT
6e OUTPUT UNIT

## Claims

1. A detection device for determining whether or not a determination target image is a detection target image including a detection target object, the detection device comprising:
an image restoration and generation unit configured to generate a non-detection target image corresponding to the determination target image by inputting data of the determination target image to a learning model in which data of a processed image is input data and data of the non-detection target image not including the detection target object according to the processed image is output data;
a difference calculation unit configured to generate a difference image between the determination target image and the non-detection target image generated by the image restoration and generation unit; and
a detection unit configured to determine whether or not the determination target image is the detection target image based on the difference image generated by the difference calculation unit.

2. The detection device according to claim 1, further comprising an image processing unit configured to perform image processing on the difference image generated by the difference calculation unit to emphasize a feature of the detection target object, wherein the detection unit is configured to determine whether or not the determination target image is the detection target image based on the difference image on which the image processing is performed by the image processing unit.

3. The detection device according to claim 2, wherein the image processing unit is configured to perform masking on an image area other than a predetermined image area in which the detection target object may exist.

4. The detection device according to any one of claims 1 to 3, further comprising a model generation unit configured to generate the learning model, using the data of the non-detection target image as learning source data, by performing learning to reconstruct a non-detection target image same as the learning source data or a non-detection target image approximating the learning source data.

5. The detection device according to claim 4, wherein the model generation unit is an autoencoder.

6. The detection device according to claim 4 or 5, wherein the model generation unit is configured to add the data of the determination target image that is determined to be the non-detection target image by the detection unit to the learning source data, and regenerate the learning model.

7. A detection system comprising:
the detection device according to any one of claims 1 to 6; and
an imaging unit configured to capture an image of a monitoring target area and outputs data of the image captured of the monitoring target area to the detection device as data of the determination target image.

8. A detection method for determining whether or not a determination target image is a detection target image including a detection target object, the detection method comprising:
an image restoration and generation step of generating a non-detection target image corresponding to the determination target image by inputting data of the determination target image to a learning model that uses data of a processed image as input data and data of the non-detection target image not including the detection target object according to the processed image as output data;
a difference calculation step of generating a difference image between the determination target image and the non-detection target image generated in the image restoration and generation step; and
a detection step of determining whether or not the determination target image is the detection target image based on the difference image generated in the difference calculation step.

9. A model generation device for generating a learning model for determining whether or not a determination target image is a detection target image including a detection target object, the model generation device comprising:
a model generation unit configured to generate a learning model in which data of a processed image is input data and data of a non-detection target image not including the detection target object according to the processed image is output data, wherein
the model generation unit is configured to generate the learning model, using the data of the non-detection target image as learning source data, by performing learning to reconstruct a non-detection target image same as the learning source data or a non-detection target image approximating the learning source data.
